# EUROPEAN PATENT SPECIFICATION

(11) **EP 0 733 441 B1**
(45) Date of publication and mention of the grant of the patent: **12.09.2001**
(21) Application number: 95305509.2
(22) Date of filing: 08.08.1995
(51) Int. Cl.: B25B 29/02

(54) **Hydraulic tensioner**
Hydraulischer Schraubenspanner
Tendeur hydraulique

(30) Priority: 17.03.1995 US 406367
(43) Date of publication of application: 25.09.1996
(73) Proprietor: Junkers, John K., Saddle River, New Jersey 07458 (US)
(72) Inventor: Junkers, John K., Saddle River, New Jersey 07458 (US)
(74) Representative: Newby, Martin John

(56) References cited:
- EP-A- 0 200 459
- WO-A-94/14578
- DE-A- 4 300 664
- GB-A- 1 249 979
- GB-A- 2 223 075
- US-A- 3 162 071

## Description

This invention relates to a hydraulic tensioner of the kind disclosed in the pre-characterising portion of claim 1.

Stud tensioning requires the use of a tool with a small diameter and possibly a low height, so that it can be used in multiple applications. In the past, a user had to determine if a customer required a low height tensioner or a small diameter tensioner, since it was impossible to make a tensioner that would meet both parameters. While small-diameter tensioners utilised a multi-stage system with several cylinder chambers staged on top of each other so as to obtain the required pulling load, low height tensioners have usually been provided with one single-cylinder chamber. A multi-stage system includes a plurality of individual cylinder chambers mounted on top of each other so that the bottom piston is connected with the piston in the cylinder chamber above to push that piston, while it is also being pushed by the hydraulic pressure. In other words each piston located above another piston would generate the combined force of both. Such a tensioner is disclosed for example in WO-94/14578. Another known hydraulic tensioner of the kind defined in the preamble of claim 1 is disclosed in GB-A-1 249 979. As most applications, however, have smaller radial clearances around the bolt than above it, it has in many instances not been possible to make a tensioner small enough in its lower diameter to fit such bolts having a small radial clearance. In addition the manufacture and assembly of the known tensioners is time consuming and expensive.

Accordingly, it is an object of the present invention to provide a hydraulic tensioner which avoids the disadvantages of the prior art.

In keeping with these objects and with others which will become apparent hereinafter, the present invention resides in a hydraulic tensioner for tensioning a threaded connector which has a substantially tubular, integral housing having an axis, one axial end to abut against an object, another opposite axial end, an outer surface, and an inner surface comprising cylindrical portions and shoulder portions joining axially adjacent cylindrical portions, the cylindrical portions reducing in diameter from said another axial end to said one axial end and defining with said shoulder portions a plurality of steps; a substantially tubular engaging element arranged radially inside said housing so as to form a space therebetween and provided with engaging means for engaging a threaded connector; a plurality of piston means arranged in said space with parts of said piston means abutting against said shoulders and said piston means being spaced axially from one another so as to form in said space a plurality of chambers having radially inner walls and radially outer walls defined by said inner surface of the housing; and means for supplying a working liquid into said chambers so as to apply a force directly or indirectly via each of said piston means to said housing and to said engaging element whereby when said housing abuts against the object in one axial direction, said engaging element is displaced axially in an opposite direction and thereby axially pulls the threaded connector in an opposite axial direction, characterised in that said outer surface of said housing has a diameter reducing in the direction from said another end toward said one end at least in the region radially outwardly of the stepped inner surface of the housing.

When the hydraulic tensioner is designed in accordance with the present invention, the lower end of the tensioner cooperating with the threaded connector has a small diameter and can fit in small radial clearances around the threaded connector. The manufacturing and assembly costs of the tensioner are reduced. Only one engaging element and only one housing need to be used in the inventive multi-stage tensioner. The housing can change its inner diameter with every cylinder chamber, while the engaging element can change its outer diameter with every cylinder chamber, so that at the location of each piston the outside diameter of the engaging element and the inside diameter of the housing are increased relative to the cylinder chamber below. By taking advantage of the fact that each piston only applies a given force and that the tensioning force applied to the engaging element by the bottom piston is less than the combined force of two or three pistons, less material to transfer this force onto the engaging element is required, so that the outer diameter of the tensioner in the region which is close to the stud to be tensioned can be smaller.

The novel features which are considered as characteristic for the invention are set forth in particular in the appended claims. The invention itself, however, both as to its construction and its method of operation, together with additional objects and advantages thereof, will be best understood from the following description of specific embodiments when read in connection with the accompanying drawings, in which:
Figure 1 is a cross-sectional view of a hydraulic tensioner in accordance with one embodiment of the present invention;
Figure 2 is a cross-sectional view of a hydraulic tensioner in accordance with another embodiment of the present invention; and
Figure 3 is a cross-sectional view of a hydraulic tensioner in accordance with a further embodiment of the invention.

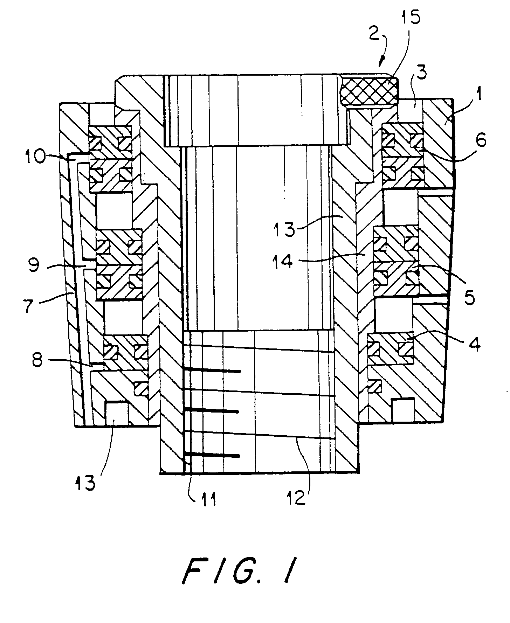

Figure 1 shows a tensioner in accordance with the present invention having a tubular housing 1 and a tubular engaging element 2 located radially inwardly of the housing 1 so as to form a space 3 therebetween. The radially outer surface of the engaging element 2 is stepped to join a plurality of different diameter outer cylindrical surfaces, whilst the radially inner surface of the housing 1 is also stepped to join different diameter inner cylindrical surfaces of the housing.

The hydraulic tensioner further has a plurality of piston means identified by reference numerals 4, 5, 6. The piston means 4 is formed as a single piston or floating body abutting against an axially upper surface of the lower end of the housing 1 and against a lower shoulder of the engaging element 2 formed between the two lower different diameter outer cylindrical surfaces of the element 2. The piston means 5 and 6 each include two pistons located adjacent to one another, the lower piston of each pair abutting against a shoulder of the housing formed between two different diameter inner cylindrical surfaces of the housing 1 and the upper piston of each pair abutting against a shoulder of the engaging element formed between two different diameter outer cylindrical surfaces of the element 2 as can be seen in Figure 1. As Figure 1 shows, the stepped shapes of the radially inner surfaces of the housing 1 and of the radially outer surface of the engaging element 2 are such that the radial dimensions of steps diminish from the upper end toward the lower end of the tensioner.

The tensioner further has means for supplying a hydraulic liquid including a lengthwise extending or substantially axial passage 7 and transverse or substantially radial passages 8, 9 and 10. The passage 8 leads into a region underneath the lower piston means 4, whereas the passages 9 and 10 each lead into regions between the individual pistons of piston means 5 and the individual pistons of piston means 6, respectively.

The engaging element 2 is provided with engaging means 11 which can be formed in particular as a screw thread or threads provided in an inner opening 12 of the engaging element. Since at least the radially outer diameter, or in other words the radially outer surface, of the engaging element 2 and the radially inner surface of the housing 1 have radial dimensions diminishing in the direction from the upper end to the lower end of the tensioner, the outer surface of the housing 1 can also have a diameter diminishing in the same direction as is shown in Figure 1. An annular recess 18 is provided in the housing 1 to reduce the weight of the tensioner.

The hydraulic tensioner described above operates in the following manner:

The tensioner is first arranged on a threaded connector (not shown), e.g. a threaded stud, so that the threaded engaging means 11 of the engaging element 2 is screwed on the threaded connector. The hydraulic liquid is then supplied through the passages 7, 8, 9 and 10. The liquid flows through the passage 8, enters underneath the piston 4 and presses or urges the housing 1 downwardly and the piston 4 upwardly. The hydraulic liquid flowing through the passages 9 and 10 presses or urges the lower piston of each piston means 5 and 6 downwardly and the upper piston of each piston means 5 and 6 upwardly. Since the housing 1 is placed on an object, for example on a flange in which the threaded stud is screwed, the housing cannot move downwardly, and therefore the engaging element 2 is displaced or urged upwardly so as to pull, and therefore to tension, the stud in the flange.

As can be seen from Figure 1, the engaging element 2 can include a radially inner puller member 13, which is provided with the opening 12 having the thread 11, and a radially outer transmission member 14 which surrounds the puller member 13 and has the radially outer stepped surface described hereinabove. The transmission member 14 is not connected with the puller member 13 but instead, during operation, axially abuts against the puller member 13 due to the cooperation between the shoulders of the puller member 13 and the transmission member 14. In such a construction the puller member 13 can be easily removed from the transmission member 14 and can be replaced with another puller member having, for example, different engaging means, i.e. a different opening 12 with a different thread 11 corresponding to a specific threaded connector. The upper end of the puller member 13 can be provided with means, for example a knurled flange, to be engaged by a user to assist in removal of the old puller member and insertion of the replacement puller member. It is of course understood that the engaging element 2, instead of being composed of two members 13 and 14, can be formed as a one-piece element. As shown in Figure 1, the radial widths of the pistons, and of the chambers in which the pistons are axially displaced, are identical for all pistons and all chambers. However, such an arrangement is not necessary, and it is possible to provide the pistons and the chambers with different radial dimensions.

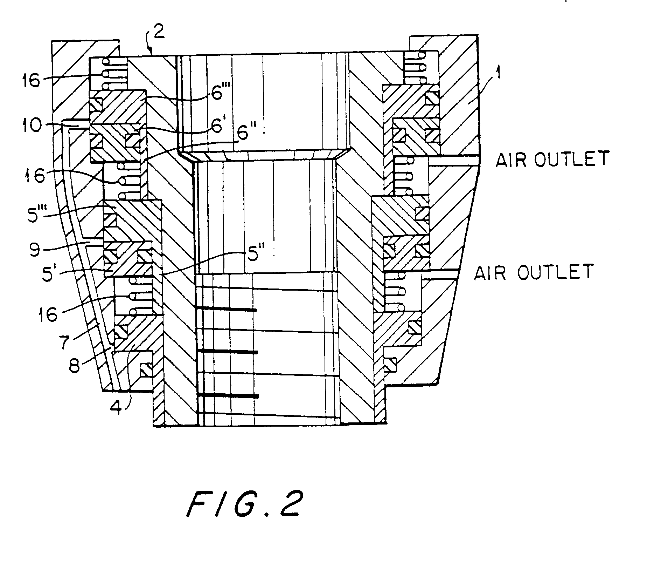

The hydraulic tensioner in accordance with the second embodiment shown in Figure 2 is substantially similar to the hydraulic tensioner of Figure 1. However, here the piston means 5' and 6' are formed somewhat differently. Each piston means 5' and 6' has a first piston 5", 6" and a second piston 5"' and 6"', which are formed and arranged so that the piston 5''' , 6''' surrounds the piston 5", 6" radially inwardly and extends axially downwardly to abut against a neighbouring, downwardly located piston. Also, the piston means are connected with one another by return springs 16.

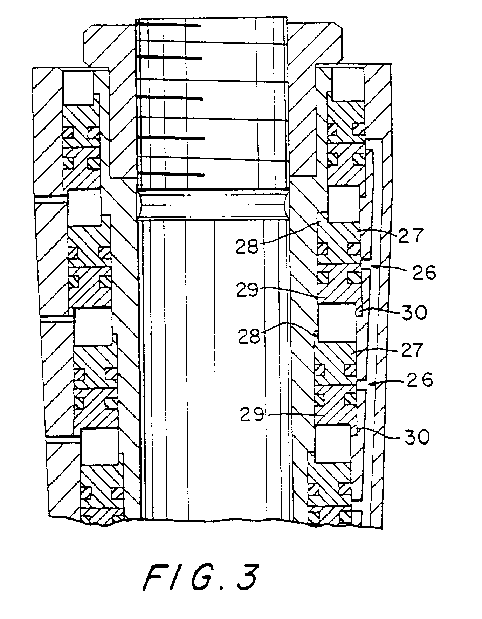

The hydraulic tensioner of Figure 3 is substantially similar to the hydraulic tensioners of Figures 1 and 2. The piston means in this tensioner are, however, different. Each piston means 26, with the exception of the lowermost piston means, has an upper piston 17 provided with a radially inner ring-shaped projection 28 which extends axially upwardly, and a lower piston 29 provided with a radially outer ring-shaped projection 30 which extends axially downwardly. The radially inner projections 28 of the pistons 27 abut axially against the steps of the engaging element 2, while the radially outer projections 30 of the pistons 29 abut against the steps of the housing 1. In such a construction the seals in the pistons are reliably protected, and at the same time the overall axial height of the tensioner is reduced.

It will be understood that each of the elements described above, or two or more together, may also find a useful application in other types of constructions differing from the types described above.

## Claims

1. A hydraulic tensioner for tensioning a threaded connector, comprising a substantially tubular, integral housing (1) having an axis, one axial end to abut against an object, another opposite axial end, an outer surface, and an inner surface comprising cylindrical portions and shoulder portions joining axially adjacent cylindrical portions, the cylindrical portions reducing in diameter from said another axial end to said one axial end and defining with said shoulder portions a plurality of steps; a substantially tubular engaging element (2) arranged radially inside said housing (1) so as to form a space (3) therebetween and provided with engaging means (11) for engaging a threaded connector; a plurality of piston means (4-6) arranged in said space (3) with parts of said piston means abutting against said shoulders and said piston means being spaced axially from one another so as to form in said space a plurality of chambers having radially inner walls and radially outer walls defined by said inner surface of the housing; and means (7-10) for supplying a working liquid into said chambers so as to apply a force directly or indirectly via each of said piston means to said housing (1) and to said engaging element (2) whereby when said housing abuts against the object in one axial direction, said engaging element (2) is displaced axially in an opposite direction and thereby axially pulls the threaded connector in an opposite axial direction, **characterised in that** said outer surface of said housing (1) has a diameter reducing in the direction from said another end toward said one end at least in the region radially outwardly of the stepped inner surface of the housing.

2. A hydraulic tensioner according to claim 1, **characterised in that** said engaging element (2) has a radially outer surface provided with a plurality of steps against which this parts of said piston means (4-6) abut.

3. A hydraulic tensioner according to claim 2, **characterised in that** said engaging element (2) includes a radially inner pulling member (13) and a radially outer transmission member (14) axially abutting against said pulling member (13), said radially inner pulling member (13) having an opening (12) provided with said engaging means (11), said radially outer transmission member (14) being provided with said radially outer surface.

4. A hydraulic tensioner according to any one of the preceding claims, **characterised in that** said piston means includes a piston (4) located closer to said one end of said housing and forming a floating base, the remaining ones (5,6) of said piston means each including two pistons located axially adjacent to one another, said means (7-10) for supplying a hydraulic liquid being formed so as to supply the hydraulic liquid in an area between said floating body and said one end of said housing and also in areas between two pistons of each of said remaining piston means.

5. A hydraulic tensioner according to any one of claim 1 to 3, **characterised in that** at least some of said piston means includes a first piston (5", 6") and a second piston (5"',6"') arranged so that said second piston radially inwardly surrounds said first piston (5",6") of a respective one of said piston means, and said second piston (5"',6"') of one of said piston means axially abuts against said second piston (5"', 6"') of another of said piston means.

6. A hydraulic tensioner according to claim 1 2, or 3 or claim 4 or 5 when not dependent on claim 3, **characterised in that** said engaging element (2) is formed as an element which is uninterrupted in the axial direction.

7. A hydraulic tensioner according to any of the preceding claims, **characterised in that** at least some of said piston means includes a first piston provided with a radially inner ring-shaped projection (28) and abutting against said engaging element and a second piston provided with a radially outer ring-shaped projection (30) abutting against an associated one of said shoulders of said housing.

8. A hydraulic tensioner according to claim 7, **characterised in that** said projections (28,30) of each of said some piston means extend in opposite axial directions and axially abut against said engaging element and one of said shoulders of said housing, respectively.

## Patentansprüche

1. Hydraulische Spannvorrichtung zum Spannen eines Gewindeverbinders, mit einem im wesentlichen röhrenförmigen, integralen Gehäuse (1), das eine Achse, ein axiales Ende zum Anstoßen an einen Gegenstand, ein anderes gegenüberliegendes axiales Ende, eine Außenfläche und eine Innenfläche, die zylindrische Teile axial neben den zylindrischen Teilen angrenzende Schulterteile umfaßt, aufweist, wobei sich der Durchmesser der zylindrischen Teile von dem anderen axialen Ende zu dem einen axialen Ende verringert und die zylindrischen Teile mit den Schulterteilen mehrere Stufen definieren; einem im wesentlichen röhrenförmigen Eingriffselement (2), das radial innerhalb des Gehäuses (1) angeordnet ist, so daß dazwischen ein Raum (3) gebildet wird, und Eingriffsmittel (11) zur Ineingriffnahme eines Gewindeverbinders aufweist; mehreren in dem Raum (3) angeordneten Kolbenmitteln (4 - 6), wobei Teile der Kolbenmittel an den Schultern anstoßen und wobei die Kolbenmittel axial voneinander beabstandet sind und so in dem Raum mehrere Kammern bilden, die radial innere Wände und radial äußere Wände, die durch die Innenfläche des Gehäuses definiert werden, aufweisen; und Mitteln (7 - 10) zur Zuführung einer Arbeitsflüssigkeit in die Kammern, um über jedes der Kolbenmittel eine Kraft direkt oder indirekt an das Gehäuse (1) und an das Eingriffselement (2) anzulegen, wodurch bei Anstoßen des Gehäuses an den Gegenstand in einer axialen Richtung das Eingriffselement (2) axial in einer entgegengesetzten Richtung verschoben wird und dadurch den Gewindeverbinder in eine entgegengesetzte axiale Richtung zieht, **dadurch gekennzeichnet, daß** sich der Durchmesser der Außenfläche des Gehäuses (1) in der Richtung von einem anderen Ende zu dem einen Ende zumindest im Bereich radial außerhalb der abgestuften Innenfläche des Gehäuses verringert.

2. Hydraulische Spannvorrichtung nach Anspruch 1, **dadurch gekennzeichnet, daß** das Eingriffselement (2) eine radial äußere Fläche aufweist, die mit mehreren Stufen versehen ist, an die andere Teile der Kolbenmittel (4 - 6) anstoßen.

3. Hydraulische Spannvorrichtung nach Anspruch 2, **dadurch gekennzeichnet, daß** das Eingriffselement (2) ein radial inneres Zugglied (13) und ein an das Zugglied (13) anstoßendes radial äußeres Übertragungsglied (14) enthält, wobei das radial innere Zugglied (13) eine Öffnung (12) aufweist, die mit dem Eingriffselement (11) versehen ist, und wobei das radial äußere Übertragungsglied (14) mit der radial äußeren Fläche versehen ist.

4. Hydraulische Spannvorrichtung nach einem der vorhergehenden Ansprüche, **dadurch gekennzeichnet, daß** die Kolbenmittel einen Kolben (4) enthalten, der näher an dem einem Ende des Gehäuses angeordnet ist und eine frei bewegliche Basis bildet, wobei die verbleibenden (5, 6) der Kolbenmittel jeweils zwei Kolben enthalten, die axial nebeneinander angeordnet sind, wobei die Mittel (7 - 10) zur Zuführung einer Hydraulikflüssigkeit so ausgebildet sind, daß sie die Hydraulikflüssigkeit in einem Bereich zwischen dem frei beweglichen Körper und dem einen Ende des Gehäuses und auch in Bereichen zwischen zwei Kolben jedes der verbleibenden Kolbenmittel zuführen.

5. Hydraulische Spannvorrichtung nach einem der Ansprüche 1 bis 3, **dadurch gekennzeichnet, daß** mindestens einige der Kolbenmittel einen ersten Kolben (5", 6") und einen zweiten Kolben (5"', 6"') enthalten, die so angeordnet sind, daß der zweite Koben den ersten Kolben (5", 6") eines jeweiligen der Kolbenmittel radial innen umgibt und daß der zweite Kolben (5"', 6"') eines der Kolbenmittel axial an den zweiten Kolben (5"', 6"') eines anderen der Kolbenmittel anstößt.

6. Hydraulische Spannvorrichtung nach Anspruch 1, 2 oder 3 oder 4 oder 5, sofern nicht von Anspruch 3 abhängig, **dadurch gekennzeichnet, daß** das Eingriffselement (2) als ein Element ausgebildet ist, das in axialer Richtung nicht unterbrochen ist.

7. Hydraulische Spannvorrichtung nach einem der vorhergehenden Ansprüche, **dadurch gekennzeichnet, daß** mindestens einige der Kolbenmittel einen ersten Kolben, der mit einem radial inneren ringförmigen Vorsprung (28) versehen ist und an das Eingriffselement anstößt, und einen zweiten Kolben, der mit einem radial äußeren ringförmigen Vorsprung (30) versehen ist, der an eine zugehörige der Schultern des Gehäuses anstößt, enthält.

8. Hydraulische Spannvorrichtung nach Anspruch 7, **dadurch gekennzeichnet, daß** sich die Vorsprünge (28, 30) jedes der mehreren Kolbenmittel in entgegengesetzte axiale Richtungen erstrecken und axial an das Eingriffselement bzw. eine der Schultern des Gehäuses anstoßen.

## Revendications

1. Tendeur hydraulique pour tendre un connecteur fileté, comprenant un boîtier (1) d'un seul tenant, essentiellement tubulaire, présentant un axe, une première extrémité axiale destinée à venir buter contre un objet, une autre extrémité axiale opposée, une surface extérieure et une surface intérieure comprenant des parties cylindriques et des parties d'épaulement jointives à des parties cylindriques adjacentes dans le sens axial, le diamètre des parties cylindriques se réduisant depuis ladite autre extrémité axiale jusqu'à ladite première extrémité axiale et définissant une pluralité de gradins avec lesdites parties d'épaulement; un élément d'engagement (2) essentiellement tubulaire agencé radialement à l'intérieur dudit boîtier (1) de manière à former entre eux un espace (3) et doté de moyens d'engagement (11) pour engager un connecteur fileté; une pluralité de moyens à pistons (4 - 6) agencés dans ledit espace (3) avec des parties desdits moyens à pistons venant buter contre lesdits épaulements, lesdits moyens à pistons étant espacés axialement l'un de l'autre de manière à former dans ledit espace une pluralité de chambres présentant des parois radialement intérieures et des parois radialement extérieures définies par ladite surface intérieure du boîtier; et des moyens (7 - 10) pour délivrer un liquide de travail dans lesdites chambres de manière à appliquer, directement ou indirectement par l'intermédiaire de chacun desdits moyens à pistons, une force sur ledit boîtier (1) et ledit élément d'engagement (2), et lorsque ledit boîtier vient buter contre l'objet dans une direction axiale, ledit élément d'engagement (2) est déplacé axialement dans une direction opposée et tire ainsi axialement le connecteur fileté dans une direction axiale opposée, **caractérisé en ce que** ladite surface extérieure dudit boîtier (1) présente un diamètre qui se réduit de ladite autre extrémité à ladite première extrémité au moins dans la région située radialement à l'extérieur de la surface intérieure en gradins du boîtier.

2. Tendeur hydraulique selon la revendication 1, **caractérisé en ce que** ledit élément d'engagement (2) présente une surface radialement extérieure dotée d'une pluralité de gradins contre lesquels d'autres parties desdits moyens à pistons (4 - 6) viennent buter.

3. Tendeur hydraulique selon la revendication 2, **caractérisé en ce que** ledit élément d'engagement (2) comprend un organe de traction (13) radialement intérieur et un organe de transmission (14) radialement extérieur qui vient buter axialement contre ledit organe de traction (13), ledit organe de traction (13) radialement intérieur présentant une ouverture (12) dotée desdits moyens d'engagement (11), ledit organe de transmission (14) radialement extérieur étant doté de ladite surface radialement extérieure.

4. Tendeur hydraulique selon l'une quelconque des revendications précédentes, **caractérisé en ce que** lesdits moyens à pistons comprennent un piston (4) plus proche de ladite extrémité dudit boîtier et formant une base flottante, les autres (5, 6) desdits moyens à pistons comprenant chacun deux pistons situés en position axialement adjacente l'une à l'autre, lesdits moyens (7 - 10) pour délivrer un liquide hydraulique étant configurés de manière à délivrer le liquide hydraulique dans une région située entre ledit corps flottant et ladite première extrémité dudit boîtier, et également dans des régions situées entre deux pistons desdits autres moyens à pistons.

5. Tendeur hydraulique selon l'une quelconque des revendications 1 à 3, **caractérisé en ce qu'**au moins certains des moyens à pistons comprennent un premier piston (5", 6") et un deuxième piston (5"', 6"') agencés de telle sorte que ledit deuxième piston entoure radialement à l'intérieur ledit premier piston (5", 6") d'un moyen à pistons respectif desdits moyens à pistons, et ledit deuxième piston (5"', 6"') de l'un desdits moyens à pistons vient buter axialement contre ledit deuxième piston (5"', 6"') d'un autre desdits moyens à pistons.

6. Tendeur hydraulique selon la revendication 1, 2 ou 3 ou la revendication 4 ou 5 dans la mesure où elle ne dépend pas de la revendication 3, **caractérisé en ce que** ledit élément d'engagement (2) est configuré comme élément qui est interrompu dans la direction axiale.

7. Tendeur hydraulique selon l'une quelconque des revendications précédentes, **caractérisé en ce qu'**au moins certains desdits moyens à pistons comprennent un premier piston doté d'une saillie annulaire radialement intérieure (28) et venant buter contre ledit élément d'engagement et un deuxième piston doté d'une saillie annulaire radialement extérieure (30) venant buter contre un épaulement associé de l'un desdits épaulements dudit boîtier.

8. Tendeur hydraulique selon la revendication 7, **caractérisé en ce que** lesdites saillies (28, 30) desdits certains moyens à pistons s'étendent dans des directions axiales opposées et viennent buter axialement respectivement contre ledit élément d'engagement et contre l'un desdits épaulements dudit boîtier.
